# EUROPEAN PATENT SPECIFICATION

(11) **EP 4 156 386 B1**
(45) Date of publication and mention of the grant of the patent: **16.04.2025**
(21) Application number: 21900120.3
(22) Date of filing: 03.12.2021
(51) Int. Cl.: H01M 50/109, H01M 50/153, H01M 50/169, H01M 50/181, H01M 50/186, H01M 50/188, H01M 50/627, H01M 50/636, H01M 50/645, H01M 10/04

(54) **BUTTON CELL AND ELECTRONIC DEVICE**
KNOPFZELLE UND ELEKTRONISCHE VORRICHTUNG
PILE BOUTON ET DISPOSITIF ÉLECTRONIQUE

(30) Priority: 04.12.2020 CN 202022901163 U
(43) Date of publication of application: 29.03.2023
(73) Proprietor: Zhuhai CosMX Battery Co., Ltd., Zhuhai, Guangdong 519180 (CN)
(72) Inventor: PENG, Ning, Zhuhai, Guangdong 519180 (CN)
(74) Representative: Gill Jennings & Every LLP
(86) International application number: PCT/CN2021/135533
(87) International publication number: WO 2022/117098

(56) References cited:
- EP-A1- 3 886 239
- EP-A1- 4 170 784
- WO-A1-2020/037535
- CN-A- 107 946 496
- CN-A- 109 192 889
- CN-A- 111 613 739
- CN-A- 111 989 800
- CN-U- 207 587 784
- CN-U- 213 520 130

## Description

### TECHNICAL FIELD

The present disclosure relates to the technical field of batteries, in particular, to a button cell and an electronic device.

### BACKGROUND

A button cell refers to a cell that is shaped like a button, and generally has a large diameter and a thin thickness. Due to the small volume of the button cell, it has been widely used in a variety of miniature electronic devices, for example, the wearable electronic device field and the medical product field and the like.

In the prior art, the button cell includes a housing, a conductive member and a sealing member. The housing is provided with a through hole that communicates with a chamber for accommodating an electrolyte, the conductive member covers the through hole and is disposed outside of the button cell, and the conductive member is attached to the housing through a sealing rubber ring; and the sealing member covers an injection port of the conductive member.

However, since the interior of the button cell is a closed space, the existing button cell has a problem of low safety and stability.

CN 213520130 U discloses a button cell and an electronic device. The button cell includes a housing and a cover assembly; the housing includes a bottom wall and an annular side wall; the cover assembly includes a top cover having a through hole at its central area and a conductive member covering the through hole; an outer edge of the top cover is welded with a top of the side wall to form an accommodating chamber for accommodating an electrode assembly and an electrolyte; and the conductive member is disposed on a side of the top cover facing the accommodating chamber, and the electronic device includes the button cell.

CN 111989800 A discloses a battery, including a battery cell and a housing assembly accommodating the battery cell. The battery cell includes a first tab. The housing assembly includes a first housing body and a second housing body. The first housing body and the second housing body define an accommodation space to accommodate the battery cell. The first housing body and/or the second housing body include an installation portion provided with a via hole. A conductive member is disposed on an inner surface or an outer surface of the housing assembly and electrically connected to the first tab. In a through direction of the via hole, a projection of the conductive member is at least partially located in the via hole.

CN 111613739 A discloses a button cell and its manufacturing method and an electronic device and is related to the field of battery technology. The conductive member of the button cell is covered on the through hole of the top cover, the top cover and the conductive member are insulated and sealed together by the sealing ring, the battery core is placed in the accommodation cavity of the bottom case, the first tab of the battery core is welded to the inner bottom wall of the bottom case, the top cover with the conductive member is tightly connected to the bottom case, and the second tab of the battery core is electrically connected with the conductive member, and finally the electrolyte is injected into the accommodation cavity through the injection opening of the conductive member, after the electrolyte injection is completed, the injection opening is covered by the sealing member and the sealing member is tightly connected to the injection opening.

CN 207587784 U discloses a cover plate for a metal shell of a battery. The cover plate body is provided with a liquid injection hole, the liquid injection hole is provided with a metal sheet that seals the liquid injection hole, the metal sheet is provided with an explosion-proof imprint, the pattern of the explosion-proof imprint consists of lines recessed in the surface of the metal sheet, forming an easily torn part for the explosion-proof purpose.

EP 3886239 A1 forming part of the state of the art pursuant Article 54(3) EPC discloses a battery including a battery cell and a casing assembly for receiving the battery cell. The battery cell includes a first electrode tab. The battery further includes an insulating member and a conductive member, the insulating member is connected between the casing assembly and the conductive member. The casing assembly defines a first through hole, and the insulating member defines a second through hole connected to the first through hole. The first electrode tab is electrically connected to the conductive member. A power consuming device including the battery is further provided.

EP 4170784 A1 forming part of the state of the art pursuant Article 54(3) EPC discloses a rechargeable battery, including an electrode assembly including a first electrode, a second electrode, a separator located between the first electrode and the second electrode, a first electrode tab extended from the first electrode, and a second electrode tab extended from the second electrode; a case connected to the first electrode tab to accommodate the electrode assembly, and including an opening portion to expose the electrode assembly; a cap plate coupled with the case to cover an outer peripheral region of the opening portion and including a through-hole to expose a center region of the opening portion; and a terminal plate connected to the second electrode tab to be insulation-bonded to the cap plate, and including a flange part covering the through-hole and a protruding part passing through the through-hole from a center portion of the flange part.

### SUMMARY

The present invention is set out in the appended set of claims. The present disclosure provides a button cell and an electronic device to solve the problem that the safety and stability of the existing button cell are low.

On the one hand, the present disclosure provides a button cell including a housing and a cover assembly;
the housing includes a bottom wall and an annular side wall, a bottom end of the side wall and the bottom wall being integrally formed;
the cover assembly includes a top cover having a through hole at its central area and a conductive member covering the through hole, the conductive member being connected with the top cover in an insulated manner;
an outer edge of the top cover is welded with a top of the side wall to form an accommodating chamber for accommodating an electrode assembly and an electrolyte, an outer surface of the outer edge of the top cover has a welding mark, and a welding penetration extends in a direction from the top cover to the side wall; and
the conductive member is disposed on a side of the top cover facing the accommodating chamber.

According to the present invention the conductive member is provided with an injection port for injecting the electrolyte into the accommodating chamber;
the cover assembly further includes a sealing member covering the injection port, and the sealing member is located on a side of the conductive member facing away from the accommodating chamber.

In an optional implementation, a protrusion arranged through the through hole is disposed on the conductive member, the protrusion is disposed on a surface of the conductive member abutting against the top cover; and a side of the conductive member facing the accommodating chamber is a plane.

In an optional implementation, the injection port penetrates the protrusion, and a center of the protrusion coincides with a center of the injection port.

By hermetically connecting the protrusion with a hole wall of the through hole through a sealing rubber ring, a contact area between the conductive member and the through hole is further increased, which not only improves the hermeticity between the conductive member and the through hole, but also enhances the tolerance of the conductive member to the pressure inside the button cell.

In an optional implementation, an end surface of the protrusion away from the accommodating chamber flushes with an end surface of the housing away from the accommodating chamber; or the end surface of the protrusion away from the accommodating chamber is located between the end surface of the housing away from the accommodating chamber and an end surface of the housing close to the accommodating chamber.

In an optional implementation, an end of the protrusion away from the accommodating chamber is provided with a counter bore, the counter bore communicates with the injection port, and a center of the counter bore coincides with the center of the injection port.

After the electrolyte is injected into the accommodating chamber through the injection port, a joint between the sealing member and the counter bore is welded outside the top cover, thereby improving the sealing performance between the sealing member and the injection port.

In an optional implementation, a distance between the end surface of the protrusion away from the accommodating chamber and an end surface of the protrusion close to the accommodating chamber is 0.1mm-0.5mm

According to the present invention a sealing rubber ring is disposed between the conductive member and the top cover.

According to the present invention a groove is disposed on a side of the sealing member facing away from the accommodating chamber, the groove forms a thinning area, and a center of the thinning area coincides with the center of the injection port.

By disposing the thinning area in the sealing member, the pressure inside the button cell may be released and reduced from the thinning area to realize the purpose that the pressure inside the button cell can be discharged in advance, thereby reducing the damage caused by the cell explosion.

On the other hand, the present disclosure also provides an electronic device including an electronic device body and the button cell of any one of the above, and the button cell providing electric energy for the electronic device body.

The present disclosure provides a button cell and an electronic device, the button cell includes a housing and a cover assembly; the housing includes a bottom wall and an annular side wall, and a bottom end of the side wall and the bottom wall are integrally formed; the cover assembly includes a top cover having a through hole at its central area and a conductive member covering the through hole, and the conductive member is connected with the top cover in an insulated manner; an outer edge of the top cover is welded with a top of the side wall to form an accommodating chamber for accommodating an electrode assembly and an electrolyte, an outer surface of the outer edge of the top cover has a welding mark, and a welding penetration extends in a direction from the top cover to the side wall; and the conductive member is disposed on a side of the top cover facing the accommodating chamber. By disposing the conductive member on the side of the top cover facing the accommodating chamber, an extrusion force of the conductive member to the top cover is larger than an adhesive force between a conductive member disposed on a side of a top cover away from the accommodating chamber and the top cover in the prior art, thereby increasing the tolerance of the conductive member to the pressure inside the button cell, reducing the damage caused by the button cell explosion, and improving the safety and stability of the button cell.

### BRIEF DESCRIPTION OF DRAWINGS

In order to more clearly explain technical solutions of embodiments of the disclosure or in the prior art, the drawings required in the description of the embodiments or the prior art will be briefly described below. Obviously, the drawings in the description below are some embodiments of the disclosure, and for those of ordinary skill in the art, other drawings may be obtained from these drawings without creative effort.
FIG. 1 is a schematic diagram of a first structure of a button cell provided in the present disclosure.
FIG. 2 is a structural schematic diagram of a conductive member in the button cell provided in FIG. 1.
FIG. 3 is a schematic diagram of a second structure of a button cell provided in the present disclosure.
FIG. 4 is a structural schematic diagram of a conductive member in the button cell provided in FIG. 3.
FIG. 5 is a schematic diagram of a third structure of a button cell provided in the present disclosure.
FIG. 6 is a structural schematic diagram of a conductive member in the button cell provided in FIG. 5.
FIG. 7 is a schematic diagram of a first structure of a sealing member provided in the present disclosure.
FIG. 8 is a structural schematic diagram of a cross-section of the sealing member of FIG. 7.
FIG. 9 is a schematic diagram of a second structure of a sealing member provided in the present disclosure.
FIG. 10 is a structural schematic diagram of a cross-section of the sealing member of FIG. 9.
FIG. 11 is a schematic diagram of a third structure of a sealing member provided in the present disclosure.
FIG. 12 is a structural schematic diagram of a cross-section of the sealing member of FIG. 11.
FIG. 13 is a schematic diagram of a fourth structure of a sealing member provided in the present disclosure.
FIG. 14 is a structural schematic diagram of a cross-section of the sealing member of FIG. 13.

Reference numerals:
10-housing; 101-accommodating chamber;
11-bottom wall; 12-side wall;
20-cover assembly; 21-top cover;
22-conductive member; 221-injection port;
222-counter bore; 223-protrusion;
23-sealing member; 231-thinning area;
30-electrode assembly; 31-first tab;
32-second tab; 40-sealing rubber ring.

### DESCRIPTION OF EMBODIMENTS

In the description of this specification, the description of the terms "one implementation", "some implementations", "schematic implementations", "examples", "specific examples", or "some examples" and the like means that the specific features, structures, materials or characteristics described in combination with implementations or examples are included in at least one implementation or example of the present disclosure. In this specification, the schematic representation of the above terms does not necessarily refer to the same implementation or example. Moreover, the specific features, structures, materials, or characteristics described may be combined in an appropriate manner in any one or more implementations or examples.

It should be noted that the terms "first" and "second" are used only for descriptive purposes and cannot be understood to indicate or imply relative importance or implicitly designate the number of indicated technical features. Therefore, the features defined with "first" or "second" may explicitly or implicitly include at least one of the features. In the description of the present disclosure, "a plurality of" means at least two, such as two, three and the like, unless otherwise specifically defined.

In the present disclosure, unless otherwise clearly specified and defined, the terms "mounting", "connection/connecting", "fixing" and the like should be understood in a broad sense. For example, it may be a fixed connection or a detachably connection, or may be integrated; it may be a mechanical connection, or may be an electrical connection or may communicate with each other; it may be directly connected, or indirectly connected by an intermediate medium, or allow communication within two elements or the interaction between two elements. For those of ordinary skill in the art, the specific meanings of the above terms in the present disclosure may be understood according to the specific situation.

In the present disclosure, unless otherwise expressly specified and defined, a first feature being "above" or "below" a second feature may refer to the first feature and the second feature being in direct contact, or the first feature and the second feature being not in direct contact but being in contact through a medium therebetween. Moreover, the first feature being "over", "above" and "on" the second feature may mean that the first feature is directly above and diagonally above the second feature, or simply indicate that the horizontal height of the first feature is higher than that of the second feature. The first feature being "under", "below" and "beneath" the second feature may mean that the first feature is directly below and diagonally below the second feature, or simply indicate that the horizontal height of the first feature is less than that of the second feature.

In the above description, the description of the reference terms "one embodiment", "some embodiments", "examples", "specific examples", or "some examples" and the like means that the specific features, structures, materials or characteristics described in combination with embodiments or examples are included in at least one embodiment or example of the present disclosure. In this specification, the schematic representation of the above terms does not necessarily refer to the same embodiment or example. Moreover, the specific features, structures, materials, or characteristics described may be combined in an appropriate manner in any one or more embodiments or examples. Further, without contradicting with each other, those skilled in the art may integrate and combine different embodiments or examples and the features of the different embodiments or examples described in this specification.

A button cell refers to a cell that is shaped like a button, and generally has a large diameter and a thin thickness. Due to the small volume of the button cell, it has been widely used in a variety of miniature electronic devices, for example, the wearable electronic device field and the medical product field and the like. In the prior art, the button cell includes a housing, a conductive member and a sealing member. The housing is provided with a through hole that communicates with a chamber for accommodating an electrolyte, the conductive member covers the through hole and is disposed outside of the button cell, and the conductive member is attached to the housing through a sealing rubber ring; and the sealing member covers an injection port of the conductive member. However, since the interior of the button cell is a closed space, the existing button cell has a problem of low safety and stability.

In order to solve the above problem, the present disclosure provides a button cell and an electronic device. By disposing a conductive member on a side of a top cover facing an accommodating chamber, an extrusion force of the conductive member to the top cover is larger than an adhesive force between a conductive member that is disposed on a side of a top cover away from the accommodating chamber and the top cover in the prior art, in this way, the tolerance of the conductive member to the pressure inside the button cell is increased, thereby reducing the damage caused when the battery explosion, and further enhancing the safety and the stability of the button cell.

A button cell and an electronic device provided in the present disclosure will be described in detail below with reference to the specific embodiments.

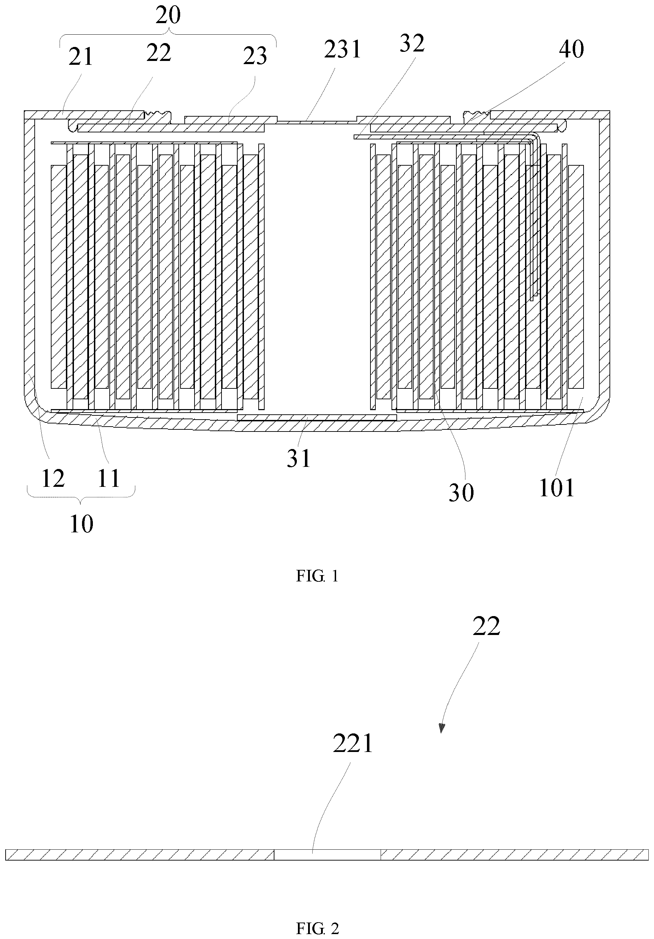

FIG. 1 is a schematic diagram of a first structure of a button cell provided in the present disclosure; and FIG. 2 is a structural schematic diagram of a conductive member in the button cell provided in FIG. 1.

The present disclosure provides a button cell including a housing 10 and a cover assembly 20; the housing 10 includes a bottom wall 11 and an annular side wall 12, a bottom end of the side wall 12 is integrally formed with the bottom wall 11; the cover assembly 20 includes a top cover 21 having a through hole at its central area and a conductive member 22 covering the through hole, and the conductive member 22 is connected with the top cover 21 in an insulated manner; an outer edge of the top cover 21 is welded to a top end of the side wall 12 to form an accommodating chamber 101 accommodating an electrode assembly 30 and an electrolyte; an outer surface of the outer edge of the top cover 21 has a welding mark, with a welding penetration extending in a direction from the top cover 21 to the side wall 12; and the conductive member 22 is disposed on a side of the top cover 21 facing the accommodating chamber 101.

A cross-section of the housing 10 may be of any shape such as a circular shape, an elliptical shape, and a polygonal shape. Here, it is not limited in the present disclosure.

The through hole is disposed on the top cover 21, so that the top cover 21 forms an annular structure. The through hole may be of a circular shape, an elliptical shape, a polygonal shape and the like, and is not specifically limited herein.

The electrode assembly 30 is located within the accommodating chamber 101. The electrode assembly 30 includes a positive electrode sheet, a negative electrode sheet and a separator for separating the positive electrode sheet and the negative positive electrode sheet; a first tab 31 is disposed on the positive electrode sheet, and the first tab 31 may be disposed on the positive electrode sheet by welding, a second tab 32 is disposed on the negative electrode sheet, and the second tab 32 may be disposed on the negative electrode sheet by welding; during a winding process, the positive electrode sheet, the negative electrode sheet and the separator are wound layer by layer from a winding head end in the same direction and finally form the electrode assembly 30.

The first tab 31 and the housing 10 are electrically connected by welding and the like, and the second tab 32 and the conductive member 22 are also electrically connected by welding or bonding. The housing 10 and the conductive member 22 are electrically connected with the positive electrode and the negative electrode of the electronic device, respectively, so that the electrode assembly 30 supplies electric energy to the electronic device through the housing 10 and the conductive member 22.

Since the electrode assembly 30 supplies electric energy to the electronic device through the housing 10 and the conductive member 22, the housing 10 and the conductive member 22 may be made of metal material, such as stainless steel, copper, iron, aluminum and other metal material.

The conductive member 22 is disposed on the side of the top cover 21 facing the accommodating chamber 101, and abuts against an abutting surface of the top cover 21.The through hole is covered by the conductive member 22, and the conductive member 22 and the top cover 21 are connected in an insulated and hermetical manner. The insulated and hermetical connection between the conductive member 22 and the top cover 21 may be achieved by bonding with an insulated seal ring, or may be realized by other ways, which is not specifically set herein.

An injection port 221 for injecting the electrolyte into the accommodating chamber 101 is also disposed in the conductive member 22, and may be of any shape such as circle, quadrilateral, polygon and the like. In one embodiment, the injection port 221 is concentrically disposed with the conductive member 22, and the conductive member 22 is concentrically disposed with the accommodating chamber 101 for accommodating the electrode assembly 30.

It should be noted that in order to improve the connection sealability between the conductive member 22 and the top cover 21, the conductive member 22 may be bonded to an inner wall of top cover 21 through a sealing rubber ring 40 by means of heating and pressurizing. In this way, the bonding reliability of the sealing rubber ring 40 may be improved, thereby enhancing the connection sealability between the conductive member 22 and the top cover 21.

In the button cell provided in the present disclosure, by providing the conductive member 22 on the side of the top cover 21 facing the accommodating chamber 101, an extrusion force of the conductive member 22 to the top cover 21 is larger than an adhesive force between a conductive member disposed on a side of a top cover away from the accommodating chamber and the top cover in the prior art, thereby increasing the tolerance of the conductive member 22 to the pressure inside the button cell, reducing the damage caused by the button cell explosion, and improving the safety and stability of the button cell.

Optionally, the cover assembly 20 further includes a sealing member 23 covering an injection port 221, the sealing member 23 is located on a side of the conductive member 22 facing away from the accommodating chamber 101, and the abutting surface between the conductive member 22 and an inner wall of the top cover 21 is a horizontal plane. The abutting surface between the conductive member 22 and the inner wall of the top cover 21 is configured to be a horizontal plane, so that the structure of the conductive member 22 is simple, thereby reducing the processing cost of the button cell.

Exemplarily, as shown in FIG. 1 and FIG. 2, the top cover 21 is in a disc shape, the through hole is a circular hole, the conductive member 22 is in a disc shape, and a diameter of the through hole is smaller than a diameter of the conductive member 22. Therefore, an edge of conductive member 22 and an edge of through hole are at least partially stacked in a radial direction, which increases the bearing capacity of the conductive member 22 on the pressure in the button cell, and the through hole and the conductive member 22 are closely bonded through the sealing rubber ring 40 by means of heating and pressurizing, which improves the sealing performance of the button cell.

Since the fact that the larger a size of one-sided stacked portion of the edges of the conductive member 22 and of the through hole in the radial direction, the better the tolerance of the conductive member 22 to the pressure inside the button cell, in one embodiment, the size of the one-sided stacked portion of the conductive member 22 and the through hole in the radial direction is greater than or equal to 1 mm and the diameter difference between the conductive member 22 and the top cover 21 is less than or equal to 0.05 mm. In this way, the contact area between the conductive member 22 and the through hole is increased, thereby increasing the tolerance of the conductive member 22 to the internal pressure of button cell.

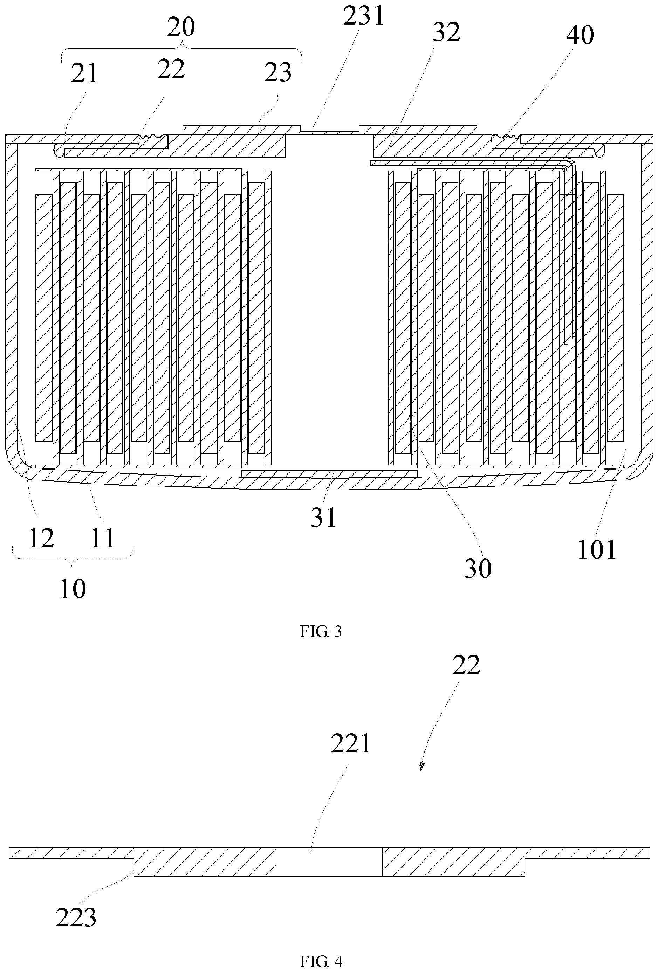

FIG. 3 is a schematic diagram of a second structure of a button cell provided in the present disclosure; and FIG. 4 is a structural schematic diagram of a conductive member in the button cell provided in FIG. 3.

Optionally, as shown in FIG. 3 and FIG. 4, the conductive member 22 is provided with a protrusion 223 which is arranged through the through hole, and the protrusion 223 is disposed on a surface of the conductive member 22 abutting against the top cover 21. A surface of the conductive member 22 facing the accommodating chamber is a plane. The injection port 221 penetrates the protrusion 223, and a center of the protrusion 223 coincides with a center of the injection port 221.

By hermetically connecting the protrusion 223 with a hole wall of the through hole via the sealing rubber ring 40, the contact area between the conductive member 22 and the through hole is further increased, which not only improves the hermeticity between the conductive member 22 and the through hole, but also enhances the bearing capacity of the conductive member 22 to the internal pressure of the button cell.

Further, an end surface of the protrusion 223 away from the accommodating chamber 101 flushes with an end surface of the housing 10 away from the accommodating chamber 101, or the end surface of the protrusion 223 away from the accommodating chamber 101 is located between the end surface of the housing 10 away from the accommodating chamber 101 and an end surface of the housing 10 close to the accommodating chamber 101. In this way, the overall structure of the button cell is more compact and the overall aesthetics of the button cell is improved.

It should be noted that, according to actual requirements, the center of the protrusion 223 may not coincide with the center of the injection port 221, and it is not specifically set herein.

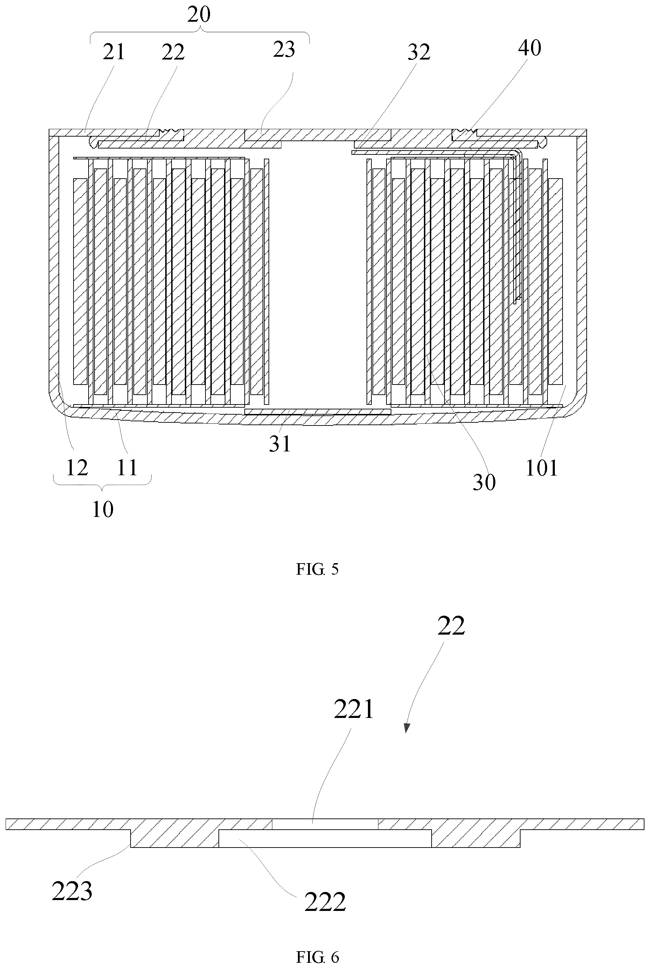

FIG. 5 is a schematic diagram of a third structure of a button cell provided in the present disclosure; and FIG. 6 is a structural schematic diagram of a conductive member in the button cell provided in FIG. 5.

Optionally, as shown in FIG. 5 and FIG. 6, a counter bore 222 is disposed at an end of the protrusion 223 away from the accommodating chamber 101, and communicates with the injection port 221. A center of the counter bore 222 coincides with the center of the injection port 221, and the sealing member 23 is disposed in the counter bore. After the electrolyte is injected into the accommodating chamber 101 through the injection port 221, a joint between the sealing member 23 and the counter bore 222 is welded outside the top cover 21, thereby improving the sealing performance between the sealing member 23 and the injection port 221.

A shape of the counter bore 222 is the same as that of the injection port 221, that is, when the injection port 221 is circular, the counter bore 222 is also circular.

Exemplarily, in an extension direction of the injection port 221, a thickness of a portion of the conductive member 22 abutting against the top cover 21 is between 0.05 mm and 0.2 mm, a thickness of the protrusion 223 is between 0.1 mm and 0.5 mm, and a depth of the counter bore 222 may be between 0.05 mm and 0.45 mm.

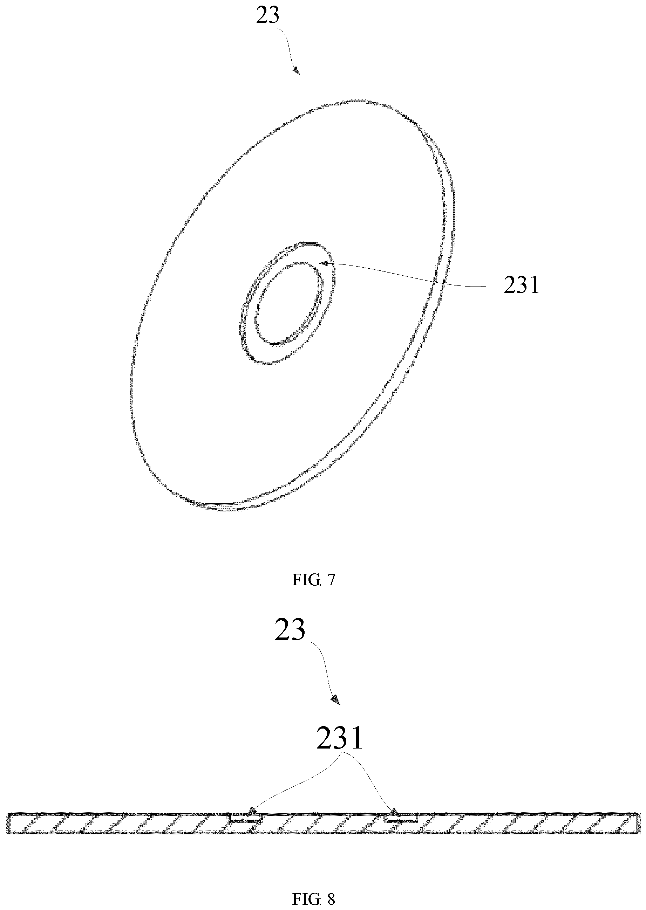

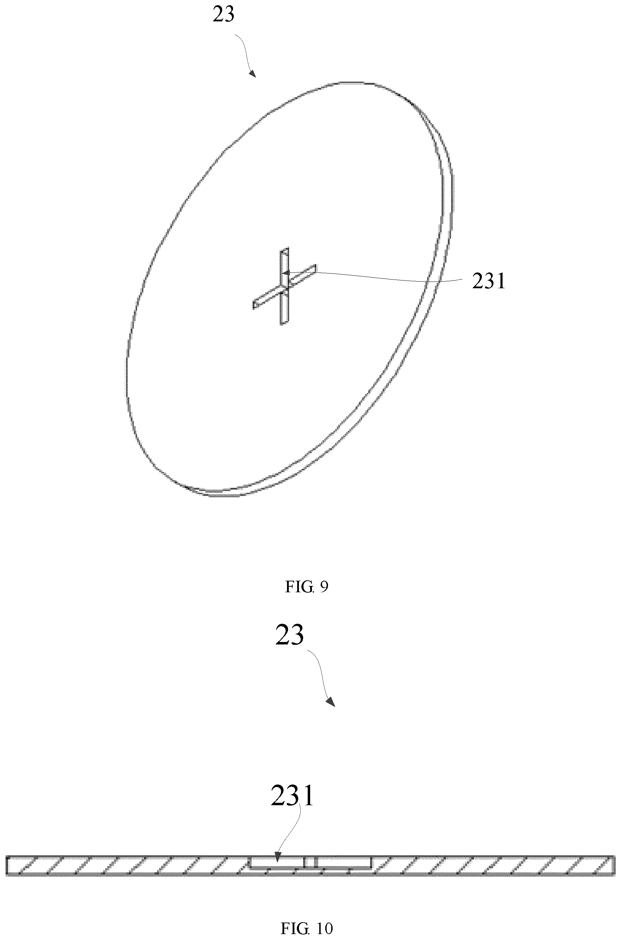

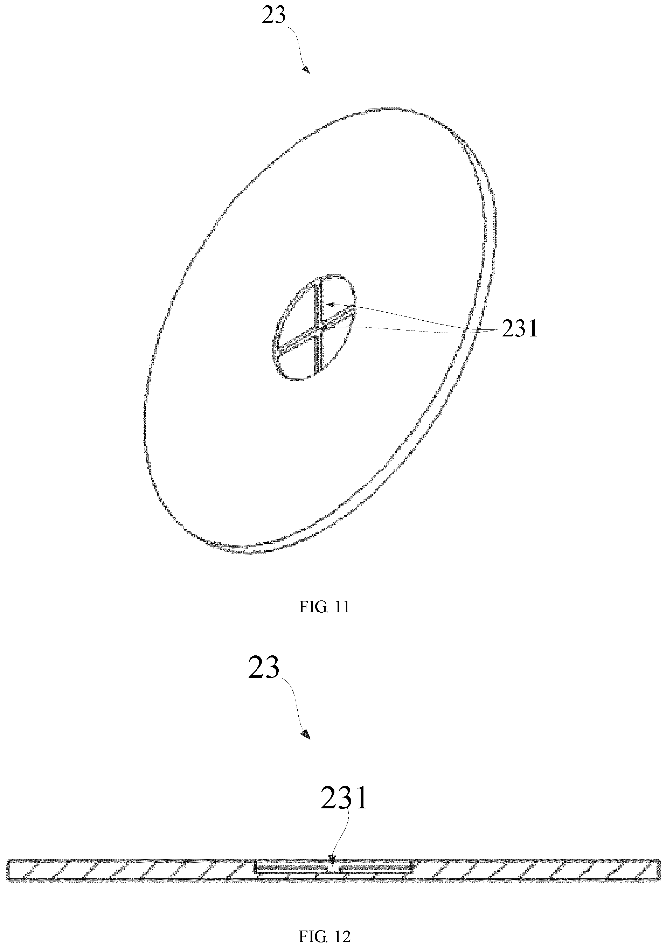

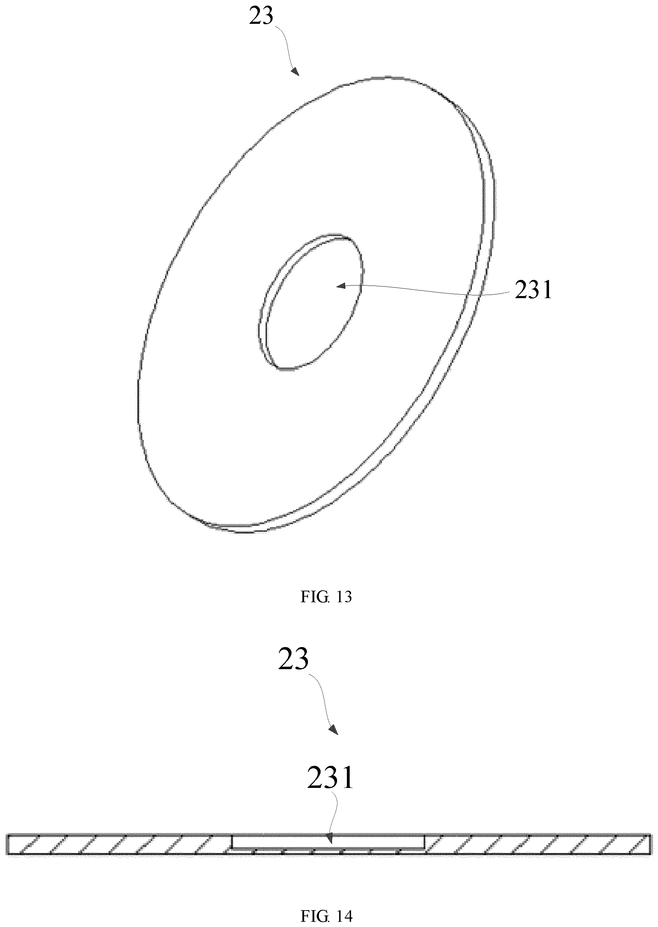

FIG. 7 is a schematic diagram of a first structure of a sealing member provided in the present disclosure; FIG. 8 is a structural schematic diagram of a cross-section of the sealing member of FIG. 7; FIG. 9 is a schematic diagram of a second structure of a sealing member provided in the present disclosure; FIG. 10 is a structural schematic diagram of a cross-section of the sealing member of FIG. 9; FIG. 11 is a schematic diagram of a third structure of a sealing member provided in the present disclosure; FIG. 12 is a structural schematic diagram of a cross-section of the sealing member of FIG. 11; FIG. 13 is a schematic diagram of a fourth structure of a sealing member provided in the present disclosure; and FIG. 14 is a structural schematic diagram of a cross-section of the sealing member of FIG. 13.

Optionally, the sealing member 23 is provided with a thinning area 231.

Since the button cell is a closed space, the pressure in the accommodating chamber 101 is relatively large, and when the pressure is too large, the damage degree will be large if a battery explosion occurs. In order to improve the safety and stability of the button cell, in the present disclosure, the thinning area 231 is provided in the sealing member 23. Since the pressure bearing capacity of the thinning area 231 is smaller than that of a region without the thinning area 231, when the internal pressure of the button cell is increased to a maximum critical value of the pressure that the thinning area 231 can bear, the thinning area 231 may crack or be directly broken up under the drive of pressure, and the pressure inside the button cell may be decreased by venting from a cracked or broken position of the thinning area 231; and at this time, the internal pressure of the battery cell does not reach a maximum critical value of the pressure that a non-thinning area can bear. Therefore, if the battery explodes, the damage effect on the battery will be greatly reduced, thereby enhancing the safety and stability of the button cell.

In the button cell provided in the embodiments of the present disclosure, the thinning area 231 is provided in the sealing member 23. Since the pressure that the thinning area 231 can bear is smaller than the pressure that the non-thinning area can bear, so when the internal pressure of the button cell is increased to a level of pressure that the thinning area 231 cannot bear, the thinning area 231 may crack or even be broken up. In this way, the pressure in the button cell may be decreased by venting from the thinning area 231 to realize the purpose that the pressure in the button cell can be released in advance, thereby reducing the damage caused by the explosion of button cell and avoiding the technical problem that the internal pressure of the button cell is too large to be discharged in advance, which may cause the damage after explosion to be relative large.

Optionally, the thinning area 231 is located on a side of the sealing member 23 facing away from the accommodating chamber 101. By disposing the thinning area 231 on the side of the sealing member 23 facing away from the accommodating chamber 101, that is, a side of the sealing member 23 facing the accommodating chamber 101 is a flat plane, in this way, the safety and stability of the button cell are improved, while avoiding reduced battery life caused by the electrolyte in the accommodating chamber 101 corroding the connection between the thinning area 231 and the area that is not thinned.

In an optional implementation, a groove is provided on the side of the sealing member 23 facing away from the accommodating chamber 101, such groove forming the thinning area 231. The groove is provided on the side of the sealing member 23 facing away from the accommodating chamber 101, so that the groove forms the thinning area 231, which is simple in structure and low in processing cost.

Optionally, the thinning area 231 may be at least one of a cross groove, a ring groove, or a circle groove.

For example, as shown in FIG. 9 and FIG. 10, the thinning area 231 is a cross groove; as shown in FIG. 7 and FIG. 8, the thinning area 231 is a circular ring groove; as shown in FIG. 11 and FIG. 12, the thinning area 231 is a combination of a circular groove and a cross groove; as shown in FIG. 13 and FIG. 14, the thinning area 231 is a circle groove. The thinning area 231 may also be an elliptical groove, a rectangular groove, a groove of any other regular shape or a combination of grooves of at least two shapes; or may be a groove of any irregular shape; or may be a combination of grooves having regular or irregular shape, which is not specifically limited herein.

Optionally, in order to facilitate processing of the thinning area 231, the center of the thinning area 231 coincides with the center of the injection port 221, which facilitates to align the center of the thinning area 231 at the time of processing the thinning area 231.

According to the present invention a groove depth of the groove is 0.01 mm-0.1 mm, in this way, while meeting the strength requirements of the sealing member 23 during normal operation, the button cell may be discharged and depressurized in advance when the internal pressure of the button cell is too large, thereby reducing the damage caused by the explosion of button cell, and improving the safety and stability of the button cell.

Further, the thinning area 231 and the sealing member 23 may be integrally formed, so the processing procedures for forming the sealing member 23 and the thinning area 231 are reduced, thereby reducing the processing cost.

Optionally, the sealing member 23 may be a sheet structure, that is, the sealing member 23 is a sealing sheet. In this way, a side of the sealing member 23 facing the accommodating chamber 101 is a flat plane, so the strength of the sealing member 23 can be improved, thereby improving the use reliability of the sealing member 23.

In addition, the sealing member 23 is provided as a sealing sheet, that is, the thickness of the sealing member 23 is relatively small. When the thickness of the sealing member 23 is relatively small, the pressure that the sealing member can bear is relatively small. Therefore, when the internal pressure of the button cell exceeds the pressure that the sealing member 23 can bear and the button cell explodes, the damage caused by the cell explosion can be reduced.

The present disclosure also provides an electronic device including an electronic device body and a button cell, the button cell providing electric energy for the electronic device body.

The structure of the button cell in the electronic device provided in the present disclosure is the same as the structure of the button cell described above, and can bring the same or similar technical effects, which is not described herein again.

Finally, it should be noted that the above embodiments are only used to illustrate the technical solutions of the present disclosure, rather than limit thereto; although the present disclosure is explained in detail with reference to the above embodiments, those ordinary skill in the art should understand that they may still modify the technical solutions recorded in the above embodiments without departing from the scope of the invention as defined in the appended claims.

## Claims

1. A button cell, comprising a housing (10) and a cover assembly (20); wherein,
the housing (10) comprises a bottom wall (11) and an annular side wall (12), a bottom end of the side wall (12) and the bottom wall (11) being integrally formed;
the cover assembly (20) comprises a top cover (21) having a through hole at its central area and a conductive member (22) covering the through hole, the conductive member (22) being connected with the top cover (21) by a sealing rubber ring (40);
an outer edge of the top cover (21) is welded with a top of the side wall (12) to form an accommodating chamber (101) for accommodating an electrode assembly (30) and an electrolyte, an outer surface of the outer edge of the top cover (21) has a welding mark, and a welding penetration extends in a direction from the top cover (21) to the side wall (12); and
the conductive member (22) is disposed on a side of the top cover (21) facing the accommodating chamber (101);
wherein the conductive member (22) is provided with an injection port (221) for injecting the electrolyte into the accommodating chamber (101);
the cover assembly (20) further comprises a sealing member (23) covering the injection port (221), and the sealing member (23) is located on a side of the conductive member (22) facing away from the accommodating chamber (101);
**characterised in that**
a groove is disposed on a side of the sealing member (23) facing away from the accommodating chamber (101); and
a groove depth of the groove is 0.01 mm-0.1 mm.

2. The button cell according to claim 1, wherein a protrusion (223) arranged through the through hole is disposed on the conductive member (22), the protrusion (223) is disposed on a surface of the conductive member (22) abutting against the top cover (21), and a side of the conductive member (22) facing the accommodating chamber (101) is a horizontal plane.

3. The button cell according to claim 2, wherein the injection port (221) penetrates the protrusion (223), and a center of the protrusion (223) coincides with a center of the injection port (221).

4. The button cell according to claim 3, wherein an end surface of the protrusion (223) away from the accommodating chamber (101) flushes with an end surface of the housing (10) away from the accommodating chamber (101); or the end surface of the protrusion (223) away from the accommodating chamber (101) is located between the end surface of the housing (10) away from the accommodating chamber (101) and an end surface of the housing (10) close to the accommodating chamber (101).

5. The button cell according to claim 4, wherein an end of the protrusion (223) away from the accommodating chamber (101) is provided with a counter bore (222), the counter bore (222) communicates with the injection port (221), and a center of the counter bore (222) coincides with the center of the injection port (221).

6. The button cell according to claim 5, wherein a distance between the end surface of the protrusion (223) away from the accommodating chamber (101) and an end surface of the protrusion (223) close to the accommodating chamber (101) is 0.1mm-0.5mm.

7. The button cell according to any one of claims 1-6, wherein the sealing rubber ring (40) is disposed between the conductive member (22) and the top cover (21).

8. The button cell according to any one of claims 1-6, wherein the groove forms a thinning area (231), and a center of the thinning area (231) coincides with the center of the injection port (221).

9. An electronic device comprising an electronic device body and the button cell according to any one of claims 1-8, the button cell providing electric energy for the electronic device body.

## Patentansprüche

1. Knopfzelle, umfassend ein Gehäuse (10) und eine Abdeckungsbaugruppe (20), wobei,
das Gehäuse (10) eine Bodenwand (11) und eine ringförmige Seitenwand (12) umfasst, wobei ein unteres Ende der Seitenwand (12) und die Bodenwand (11) einstückig ausgebildet sind;
die Abdeckungsbaugruppe (20) eine obere Abdeckung (21) umfasst, die in ihrem mittleren Bereich ein Durchgangsloch und ein leitendes Element (22) aufweist, das das Durchgangsloch abdeckt, wobei das leitende Element (22) mit der oberen Abdeckung (21) durch einen Dichtungsgummiring (40) verbunden ist;
ein äußerer Rand der oberen Abdeckung (21) mit einer Oberseite der Seitenwand (12) verschweißt ist, um eine Aufnahmekammer (101) zur Aufnahme einer Elektrodenbaugruppe (30) und eines Elektrolyten zu bilden, eine äußere Oberfläche des äußeren Randes der oberen Abdeckung (21) eine Schweißmarkierung aufweist und sich ein Schweißdurchbruch in einer Richtung von der oberen Abdeckung (21) zu der Seitenwand (12) erstreckt; und
das leitende Element (22) auf einer Seite der oberen Abdeckung (21) angeordnet ist, die der Aufnahmekammer (101) zugewandt ist;
wobei das leitende Element (22) mit einem Einspritzanschluss (221) zum Einspritzen des Elektrolyten in die Aufnahmekammer (101) bereitgestellt ist;
die Abdeckungsbaugruppe (20) ferner ein Dichtungselement (23) umfasst, das den Einspritzanschluss (221) abdeckt, und das Dichtungselement (23) auf einer von der Aufnahmekammer (101) abgewandten Seite des leitenden Elements (22) angeordnet ist;
**dadurch gekennzeichnet, dass**
eine Nut auf einer von der Aufnahmekammer (101) abgewandten Seite des Dichtungselements (23) angeordnet ist; und
eine Nuttiefe der Nut von 0,01-0,1 mm ist.

2. Knopfzelle nach Anspruch 1, wobei ein durch das Durchgangsloch angeordneter Vorsprung (223) auf dem leitenden Element (22) angeordnet ist, der Vorsprung (223) auf einer Oberfläche des leitenden Elements (22) angeordnet ist, die gegen die obere Abdeckung (21) stößt, und eine der Aufnahmekammer (101) zugewandte Seite des leitenden Elements (22) eine horizontale Ebene ist.

3. Knopfzelle nach Anspruch 2, wobei der Einspritzanschluss (221) den Vorsprung (223) durchdringt und ein Zentrum des Vorsprungs (223) mit einem Zentrum des Einspritzanschlusses (221) zusammenfällt.

4. Knopfzelle nach Anspruch 3, wobei eine von der Aufnahmekammer (101) abgewandte Endoberfläche des Vorsprungs (223) mit einer von der Aufnahmekammer (101) abgewandten Endoberfläche des Gehäuses (10) bündig ist; oder die von der Aufnahmekammer (101) abgewandte Endoberfläche des Vorsprungs (223) zwischen der von der Aufnahmekammer (101) abgewandten Endoberfläche des Gehäuses (10) und einer Endoberfläche des Gehäuses (10) nahe der Aufnahmekammer (101) angeordnet ist.

5. Knopfzelle nach Anspruch 4, wobei ein von der Aufnahmekammer (101) entferntes Ende des Vorsprungs (223) mit einer Gegenbohrung (222) versehen ist, die Gegenbohrung (222) mit dem Einspritzanschluss (221) in Verbindung steht und eine Mitte der Gegenbohrung (222) mit der Mitte des Einspritzanschlusses (221) zusammenfällt.

6. Knopfzelle nach Anspruch 5, wobei der Abstand zwischen der von der Aufnahmekammer (101) entfernten Endoberfläche des Vorsprungs (223) und einer Endoberfläche des Vorsprungs (223) nahe der Aufnahmekammer (101) 0,1-0,5 mm beträgt.

7. Knopfzelle nach einem der Ansprüche 1 bis 6, wobei der Dichtungsgummiring (40) zwischen dem leitenden Element (22) und der oberen Abdeckung (21) angeordnet ist.

8. Knopfzelle nach einem der Ansprüche 1 bis 6, wobei die Nut einen Verdünnungsbereich (231) bildet und ein Zentrum des Verdünnungsbereichs (231) mit dem Zentrum des Einspritzanschlusses (221) zusammenfällt.

9. Elektronische Vorrichtung, umfassend einen elektronischen Vorrichtungskörper und die Knopfzelle nach einem der Ansprüche 1 bis 8, wobei die Knopfzelle elektrische Energie für den elektronischen Vorrichtungskörper bereitstellt.

## Revendications

1. Pile bouton, comprenant un boîtier (10) et un ensemble couvercle (20) ; dans laquelle,
le boîtier (10) comprend une paroi inférieure (11) et une paroi latérale annulaire (12), une extrémité inférieure de la paroi latérale (12) et la paroi inférieure (11) étant formées d'un seul tenant ;
l'ensemble couvercle (20) comprend un couvercle supérieur (21) présentant un trou traversant au niveau de sa zone centrale et un élément conducteur (22) recouvrant le trou traversant, l'élément conducteur (22) étant relié au couvercle supérieur (21) par une bague (40) d'étanchéité en caoutchouc ;
un bord extérieur du couvercle supérieur (21) est soudé à une partie supérieure de la paroi latérale (12) pour former une chambre (101) de réception destinée à recevoir un ensemble électrode (30) et un électrolyte, une surface extérieure du bord extérieur du couvercle supérieur (21) présente une marque de soudure, et une pénétration de soudure s'étend dans une direction du couvercle supérieur (21) à la paroi latérale (12) ; et
l'élément conducteur (22) est disposé sur un côté du couvercle supérieur (21) orienté vers la chambre (101) de réception ;
dans laquelle l'élément conducteur (22) est doté d'un orifice (221) d'injection pour injecter l'électrolyte dans la chambre (101) de réception ;
l'ensemble couvercle (20) comprend en outre un élément d'étanchéité (23) recouvrant l'orifice (221) d'injection et l'élément d'étanchéité (23) est situé sur un côté de l'élément conducteur (22) orienté à l'opposé de la chambre (101) de réception ; **caractérisé en ce que**
une rainure est disposée sur un côté de l'élément d'étanchéité (23) orienté à l'opposé de la chambre (101) de réception ; et
une profondeur de rainure de la rainure est de 0,01 mm à 0,1 mm.

2. Pile bouton selon la revendication 1, dans laquelle une saillie (223) agencée à travers le trou traversant est disposée sur l'élément conducteur (22), la saillie (223) est disposée sur une surface de l'élément conducteur (22) venant en butée contre le couvercle supérieur (21), et un côté de l'élément conducteur (22) orienté vers la chambre (101) de réception est un plan horizontal.

3. Pile bouton selon la revendication 2, dans laquelle l'orifice (221) d'injection pénètre la saillie (223), et un centre de la saillie (223) coïncide avec un centre de l'orifice (221) d'injection.

4. Pile bouton selon la revendication 3, dans laquelle une surface d'extrémité de la saillie (223) éloignée de la chambre (101) de réception affleure une surface d'extrémité du boîtier (10) éloignée de la chambre (101) de réception ; ou la surface d'extrémité de la saillie (223) éloignée de la chambre (101) de réception est située entre la surface d'extrémité du boîtier (10) éloignée de la chambre (101) de réception et une surface d'extrémité du boîtier (10) proche de la chambre (101) de réception.

5. Pile bouton selon la revendication 4, dans laquelle une extrémité de la saillie (223) éloignée de la chambre (101) de réception est dotée d'un lamage (222), le lamage (222) communique avec l'orifice (221) d'injection, et un centre du lamage (222) coïncide avec le centre de l'orifice (221) d'injection.

6. Pile bouton selon la revendication 5, dans laquelle une distance entre la surface d'extrémité de la saillie (223) éloignée de la chambre (101) de réception et une surface d'extrémité de la saillie (223) proche de la chambre (101) de réception est de 0,1 mm à 0,5 mm.

7. Pile bouton selon l'une quelconque des revendications 1 à 6, dans laquelle la bague (40) d'étanchéité en caoutchouc est disposée entre l'élément conducteur (22) et le couvercle supérieur (21).

8. Pile bouton selon l'une quelconque des revendications 1 à 6, dans laquelle la rainure forme une zone (231) d'amincissement et un centre de la zone (231) d'amincissement coïncide avec le centre de l'orifice (221) d'injection.

9. Dispositif électronique comprenant un corps de dispositif électronique et la pile bouton selon l'une quelconque des revendications 1 à 8, la pile bouton fournissant de l'énergie électrique pour le corps de dispositif électronique.
